# EUROPEAN PATENT SPECIFICATION

(11) **EP 2 577 124 B1**
(45) Date of publication and mention of the grant of the patent: **04.03.2015**
(21) Application number: 11721539.2
(22) Date of filing: 26.05.2011
(51) Int. Cl.: F16K 17/04, F16K 17/196

(54) **INTELLIGENT PRESSURE RELIEF DEVICE FOR A DOUBLE ISOLATION VALVE**
DRUCKENTLASTUNGSVORRICHTUNG FÜR EIN BIDIREKTIONALES ABSPERRVENTIL
DISPOSITIF DE DÉCHARGE DE PRESSION POUR UN CLAPET D'ISOLEMENT BIDIRECTIONNEL

(30) Priority: 26.05.2010 US 348692 P
(43) Date of publication of application: 10.04.2013
(73) Proprietor: Petrolvalves S.r.l., 20124 Milano (IT)
(72) Inventor: POZZATI, Roberto, 21052 Busto Arsizio Varese (IT)
(74) Representative: Beyer, Andreas
(86) International application number: PCT/EP2011/058637
(87) International publication number: WO 2011/147911

(56) References cited:
- EP-A2- 1 106 880
- WO-A1-98/55784
- WO-A1-2009/150495
- US-A- 2 765 181
- US-A- 3 339 579
- US-A- 4 033 375
- US-A1- 2005 028 869

## Description

### Cross-Reference to Related Application(s)

This application is related to and claims priority benefits from U.S. Provisional Patent Application Serial No. 61/348,692 filed May 26, 2010, entitled "Intelligent Pressure Relief Valve".

### Field of the Invention

The present invention relates to pressure relief devices, and particularly to a device capable of providing upstream self relieving of body cavity overpressure for double isolation valves.

### Background of the Invention

Isolation valves are designed to provide a double isolation barrier; typically, this is achieved either with double piston effect seats (ball or slab gate) valves or with double expanding gate valves. Both of these valve types are non-self-relieving. In fact, each seat is designed to provide a tight seal regardless of whether the pressure is acting from line-to-body or from body-to-line. This means that an eventual overpressure is retained in the body cavity by the specific seat design.

When double barrier isolation valves are exposed to thermal sources (such as, for example, radiation, proximity to hot equipment, and the like), the rise of valve body temperature can lead to an unacceptable increase in pressure.

A pressure relief valve of this type is known from the document EP 1106880.

The present pressure relief device maintains the valve body cavity pressure within acceptable limits.

An important issue in pressure relief device design is where the excess of pressure should be directed. Assuming that release to the atmosphere is not practicable, the aim is to convey the excess fluid from the cavity to the high pressure (HP) side of the valve. In fact, the low pressure side should be isolated by the shut-off valve, which when closed has the function of preventing fluid from entering the low pressure conduit.

In general, however, such isolation valves are bi-directional. In other words, either valve end can be the HP side when the valve is closed. As a result, the pressure relieve device can discern or "understand" which is the actual high pressure side and convey the body overpressure toward the HP side.

### Summary of the Invention

A pressure relief device for a double isolation valve comprises all of the features of claim 1.

In operation, reverse pressure causes retraction of the seats, thereby relieving valve body cavity overpressure.

In a preferred pressure relief device, each of the seats is shouldered into the body. More preferably, the seats are shouldered into the body by metal-to-metal contact. The seats are preferably piston-effect type and positively energized by pressure directed toward the disc.

### Brief Description of the Drawing(s)

FIG. 1A is a side schematic view of a double isolation valve incorporating the present intelligent pressure relief device, in which an overpressure has developed at side A of the valve body.
FIG. 1B is a side schematic view of the double isolation valve of FIG. 1A showing actuation of the present intelligent pressure relief device to relieve pressure in the direction of the arrow in FIG. 1B.
FIG. 2A is a side schematic view of a double isolation valve incorporating the present intelligent pressure relief device, in which an overpressure has developed at side B of the valve body.
FIG. 2B is a side schematic view of the double isolation valve of FIG. 2A showing actuation of the present intelligent pressure relief device to relieve pressure in the direction of the arrow in FIG. 2B.
FIG. 3 is a side sectional view of the present intelligent pressure relief device showing its constituent components

### Description of Preferred Embodiment(s)

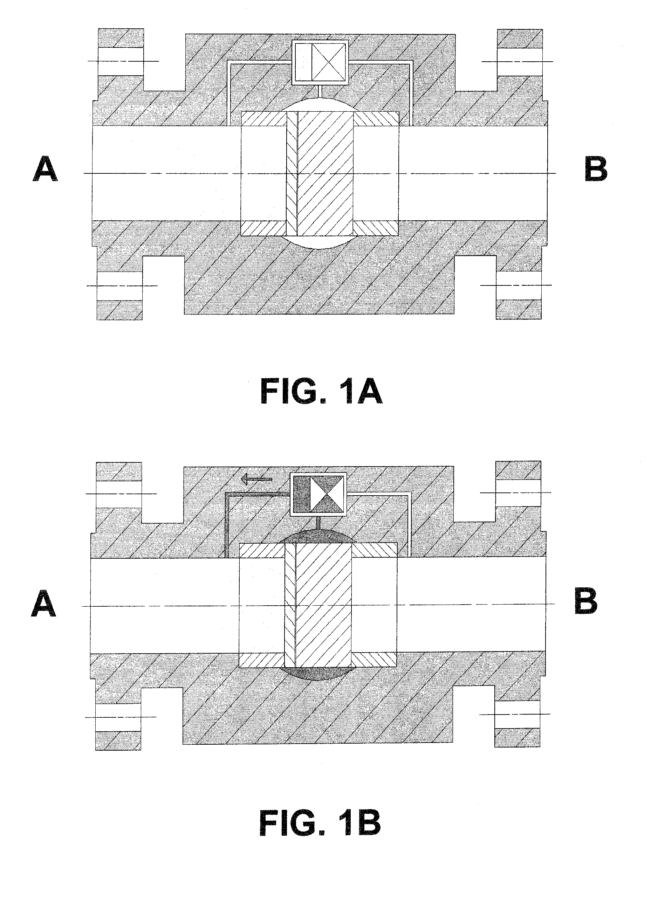

Turning first to FIG. 1A, a double isolation valve incorporating the present intelligent pressure relief device has an overpressure developed at side A of the valve body. As shown in FIG. 1B, actuation of the present pressure relief device relieve pressure in the direction of the arrow in FIG. 1B and directs the higher pressure fluid stream back toward side A of the valve body.

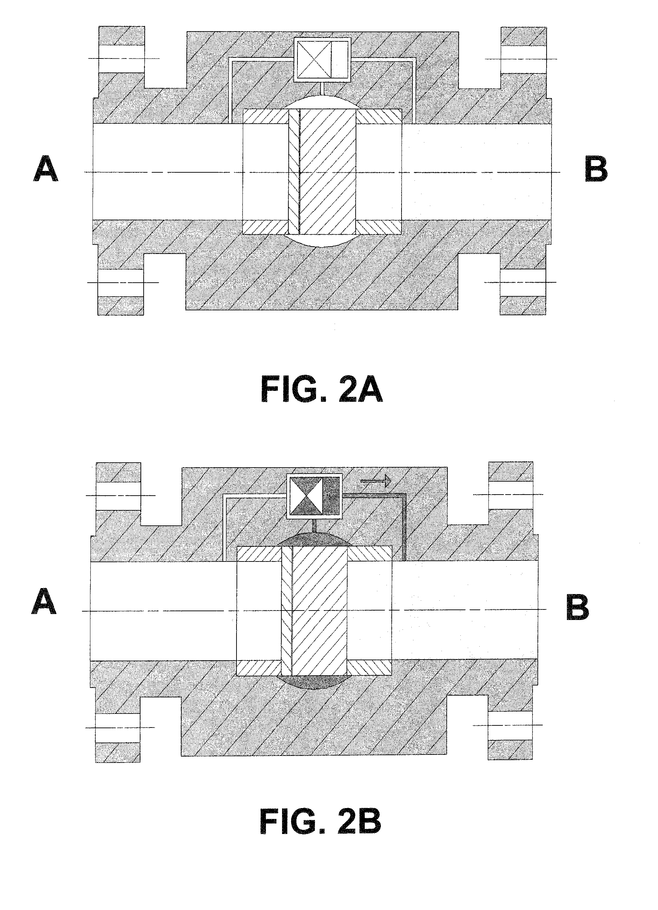

In FIG. 2A, the double isolation valve incorporating the present intelligent pressure relief device has an overpressure developed at side B of the valve body. As shown in FIG. 2B, actuation of the present pressure relief device relieve pressure in the direction of the arrow in FIG. 2B and directs the higher pressure fluid stream back toward side B of the valve body.

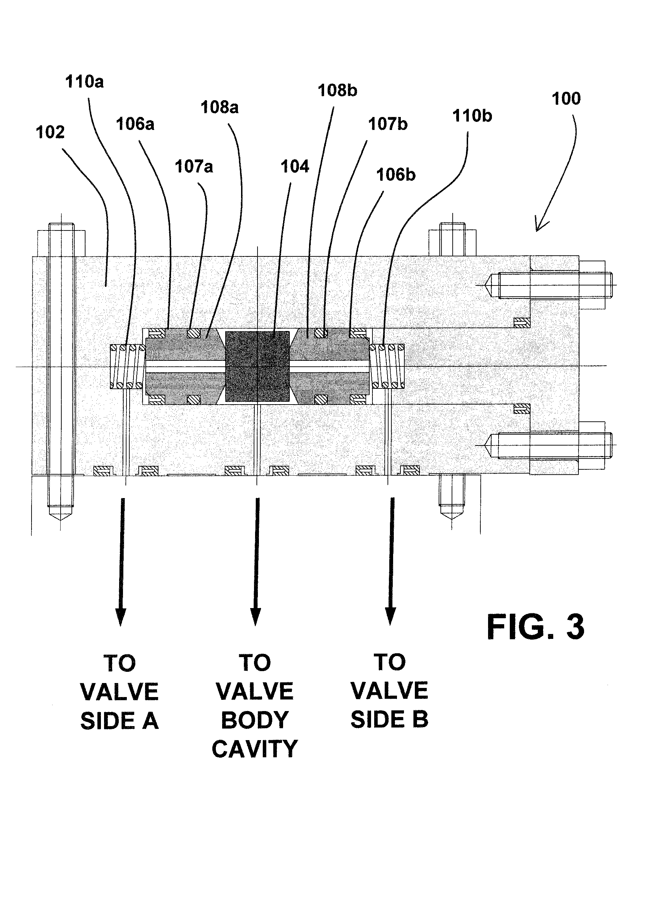

FIG. 3 shows a side sectional view of the present intelligent pressure relief device 100. Pressure relief device 100 includes a disc 104 reciprocally mounted in a pocket formed in valve body 102. Disc 104 is interposed between two floating seats 108a, 108b. Seats 108a, 108b are actuated by springs 110a, 110b, respectively.

Each of seats 108a, 108b is in direct connection with the respective valve end, as shown by the arrows depicting the flow of fluid to side A and side B of the valve body shown and described previously with respect to FIGS. 1A, 1B, 2A and 2B. The central section of pressure relief device 100, where disc 104 is located, is in fluid communication with the valve body cavity, as shown by the arrow depicting the flow of fluid to the valve body cavity.

As further shown in FIG. 3, each of seats 108a, 108b is provided with gaskets, two of which are shown as gaskets 106a, 106b. Each of seats 108a, 108b is preferably further provided with a second set of gaskets 107a, 107b, such that seats 108a, 108b are provided with two different types of gaskets in series, as shown in the embodiment depicted in FIG. 3, in which the two gaskets are interposed between each of seats 108a, 108b and the pocket formed in valve body 102. The back of each seat 108a, 108b is shouldered, preferably by metal-to-metal contact, into valve body 102.

Seats 108a, 108b are piston-effect type components that are positively energized by pressure exerted toward disc 104. Reverse pressure causes retraction of seats 108a, 108b, thereby allowing relief of overpressure developed in the main cavity of valve body 102. (See FIGS. 1B and 2B, in which overpressure is relieved in the direction of the arrows and the higher pressure fluid stream is directed back toward the side of the valve body exerting the overpressure.)

The present intelligent pressure relief device has the following distinguishing features and benefits:
(a) Valve body cavity pressure that exceeds the value of HP side pressure is relieved into the HP side itself. This is achieved regardless of which is the actual HP side when the valve is closed
(b) The present intelligent pressure relief device has substantially no impact or influence on the following valve performance characteristics:
   (1) sealing capability;
   (2) bi-directional behavior;
   (3) double block and bleed capability.

While particular elements, embodiments and applications of the present invention have been shown and described, it will be understood, of course, that the invention is not limited thereto since modifications can be made by those skilled in the art without departing from the scope of the appended claims.

## Claims

1. A pressure relief device (100) for a double isolation valve comprising a body (102) with a valve cavity, said body having a pocket formed therein, a disc (104) disposed in the central section of said pocket, said disc (104) interposed between two spring-actuated seats (108a, 108b), each of said seats in fluid communication with opposing valve sides (A, B), said pocket central section in fluid communication with said valve body cavity, wherein said disc (104) is mounted reciprocally moveable in said pocket central section and wherein each of said seats (108a, 108b) is a floating seat and is provided with two different types of gaskets in series, whereby overpressure in the valve body cavity causes retraction of the seat of the valve side (A, B) where the pressure is higher, thereby relieving valve body cavity overpressure only to the valve side (A, B) where the pressure is higher.

2. The pressure relief device of claim 1 wherein each of said seats is shouldered into said body.

3. The pressure relief device of claim 2 wherein said seats are shouldered into said body by metal-to-metal contact.

4. The pressure relief device of claim 1 wherein the seats are piston-effect type and positively energized by pressure directed toward said disc.

## Patentansprüche

1. Druckentlastungsventil (100) für ein bidirektionales Absperrventil umfassend einen Körper (102) mit einem Ventilhohlraum, wobei der Körper eine darin ausgebildete Tasche aufweist, eine in dem zentralen Abschnitt der Tasche angeordnete Scheibe (104), wobei die Scheibe (104) zwischen zwei federbetätigten Sitzen (108a, 108b) angeordnet ist, wobei jeder der Sitze in Fluidverbindung mit entgegengesetzten Ventilseiten (A, B) steht, wobei der zentrale Abschnitt der Tasche in Fluidverbindung mit dem Ventilhohlraum des Körpers steht, wobei die Scheibe (104) hin und her beweglich in dem zentralen Abschnitt der Tasche angebracht ist und wobei jeder der Sitze (108a, 108b) ein schwimmender Sitz ist und mit zwei unterschiedlichen Arten von Dichtungen in Reihe versehen ist, wodurch ein Überdruck in dem Ventilhohlraum des Körpers ein Zurückziehen des Sitzes auf der Ventilseite (A, B) bewirkt, auf der der Druck höher ist, so dass ein Überdruck in dem Ventilhohlraum des Körpers nur zu der Ventilseite (A, B) abgelassen wird, auf der der Druck höher ist.

2. Druckentlastungsvorrichtung nach Anspruch 1, bei der jeder der Sitze in dem Körper abgesetzt ist.

3. Druckentlastungsvorrichtung nach Anspruch 2, bei der die Sitze in dem Körper durch einen Metall-Metall-Kontakt abgesetzt sind.

4. Druckentlastungsvorrichtung nach Anspruch 1, bei der die Sitze von einer Kolbenwirkungsart sind und durch zur Scheibe gerichteten Druck aktiv betätigt sind.

## Revendications

1. Dispositif (100) de décharge de pression pour un clapet d'isolement bidirectionnel comprenant un corps (102) avec une cavité pour clapet, ledit corps ayant une poche formée dans celui-ci, un disque (104) disposé dans la section centrale de ladite poche, ledit disque (104) interposé entre deux sièges (108a, 108b) à actionnement par ressort, chacun desdits sièges en communication de fluide avec des côtés (A, B) opposés de clapet, ladite section centrale de poche en communication de fluide avec ladite cavité de corps de clapet, dans lequel ledit disque (104) est monté mobile en va-et-vient dans ladite section centrale de poche et dans lequel chacun desdits sièges (108a, 108b) est un siège flottant et est prévu avec deux types différents de joints d'étanchéité en série, d'où il résulte qu'une surpression dans la cavité de corps de clapet cause un retrait du siège du côté (A, B) de clapet où la pression est plus élevée, éliminant ainsi une surpression de cavité de corps de clapet uniquement vers le côté (A, B) de clapet où la pression est plus élevée.

2. Dispositif de décharge de pression selon la revendication 1, dans lequel chacun desdits sièges est monté en épaulement dans ledit corps.

3. Dispositif de décharge de pression selon la revendication 2, dans lequel lesdits sièges sont montés en épaulement dans ledit corps par un contact métal sur métal.

4. Dispositif de décharge de pression selon la revendication 2, dans lequel les sièges sont du type à effet piston et actionnés positivement par une pression dirigée vers ledit disque.
